Europäisches Patentamt

European Patent Office

Office européen des brevets

(19)

(11) Publication number: 0 122 595

A1

(12) EUROPEAN PATENT APPLICATION

(21) Application number: 84104050.4

(22) Date of filing: 11.04.84

(51) Int. Cl.³: H 01 H 9/16
H 02 B 15/00, H 02 B 13/02

(30) Priority: 11.04.83 JP 54911/83

(43) Date of publication of application:
24.10.84 Bulletin 84/43

(84) Designated Contracting States:
CH DE FR LI

(71) Applicant: MITSUBISHI DENKI KABUSHIKI KAISHA
2-3, Marunouchi 2-chome Chiyoda-ku
Tokyo 100(JP)

(72) Inventor: Takatsuka, Keizo
2-4-6, Torigai-nono
City of Settsu Osaka(JP)

(72) Inventor: Murakami, Masanori
1-5-24, Nikawa-cho
City of Nishinomiya Hyogo Prefecture(JP)

(72) Inventor: Takeuchi, Hiroshi
c/o Taihei Dormitory 2-1, Andoji-cho
City of Itami Hyogo Prefecture(JP)

(74) Representative: Fleuchaus, Leo, Dipl.-Ing. et al,
Fleuchaus & Wehser Melchiorstrasse 42
D-8000 München 71(DE)

(54) Gas insulated switch assembly.

(57) A gas insulated switch assembly has three circuit discon-nectors (24, 26 and 28) and three ground switches (34, 36 and 38) having respective contact sets (44) disposed within an enclosed container, six transparent viewing windows (46) one for each contact set (44) provided on the enclosed container so as to look the associated contact sets (44), and six fiber-scopes (40) including light receiving portions (40a) at one end positioned on the outside of the respective transparent view-ing windows to look the associated contact sets (44) and the other end portions collected together in a collecting box 42 located on the ground.

FIG.1

## GAS INSULATED SWITCH ASSEMBLY

This invention relates to a gas insulated switch assembly comprising an enclosed container filled with an electrically insulating gas, circuit disconnectors and ground switches having respective contact sets disposed within the enclosed container, and a plurality of transparent viewing windows one for each of the contact sets provided on the enclosed container to permit the transparent viewing window to be visually observed therethrough respectively.

In gas insulated switch assemblies, individual structural devices thereof are accommodated within the enclosed metallic container and therefore there is a difficult that one can not directly visually observe and confirm the open and closed statuses of contact sets of a circuit disconnector, ground switch etc. forming the structural devices. On the other hand, the circuit disconnector, the ground switch etc. are required to be reliably operated in view of the safety, when other associated equipments undergo inspections and others. Thus, if circumstances require, at least one transparent viewing window has been disposed on an enclosed metallic container for the circuit disconnector, the ground switch etc. to cause the operator to directly look contact sets thereof, through the same and confirm the operations thereof.

SO14P-2820EPA

However, in order to decrease areas required for installation thereof, gas insulated switch assemblies tend to be increasingly installed into multistory or three-dimensional structure high in the vertical direction. Thus even though a plurality of transparent viewing windows would have been disposed on the enclosed container for such gas insulated switch assemblies for the purpose of directly visually observing the interior of the container, it has been required to dispose on the container an inspection corridor which is high and compricated in structure.

Accordingly, it is an object of the present invention to provide a gas insulated switch assembly including a novel means for visually observing and confirming the open and closed statuses of a contact set of each of circuit disconnectors, ground switches etc. included in the gas insulated switch assembly, for example, at a single position without the necessity of using an inspection corridor complicated in structure and large-scaled.

In order to achieve this object, the present invention is characterized in that there are provided a plurality of fiberscopes one for each of the transparent viewing windows, each of the fiberscopes including a multitude of optical fibers arranged into a bundle and a light receiving portion at one end thereof positioned on the atmosphere side of the associated transparent viewing window to oppose to the latter.

SO14P-2820EPA

In a preferred embodiment of the present invention the plurality of fiberscopes have the other end portions collected together into a single group or a plurality of groups each including a plurality of fiberscopes at a predetermined position.

In order to make an image of each of the contact sets, a focussing lens may be advantageously disposed between each of the transparent viewing window and the light receiving portion of the fiberscope opposing to the latter.

In order to more definitely observe the interior thereof, the enclosed container may be provided with at least one lighting window.

The present invention will be further described, by way of example, in conjunction with the accompanying drawing in which:

Fig. 1 is a front elevational view of one embodiment of a gas insulated switch assembly according to the present invention;

Fig. 2 is a single line connection diagram of the arrangement shown in Fig. 1;

Fig 3 is a fragmental elevational view of the details of one of transparent viewing window disposed on the arrangement shown in Fig. 1 and the adjacent component; and

Fig. 4 is a view similar to Fig. 2 but illustrating a modification of the present invention.

SO14P-2820EPA

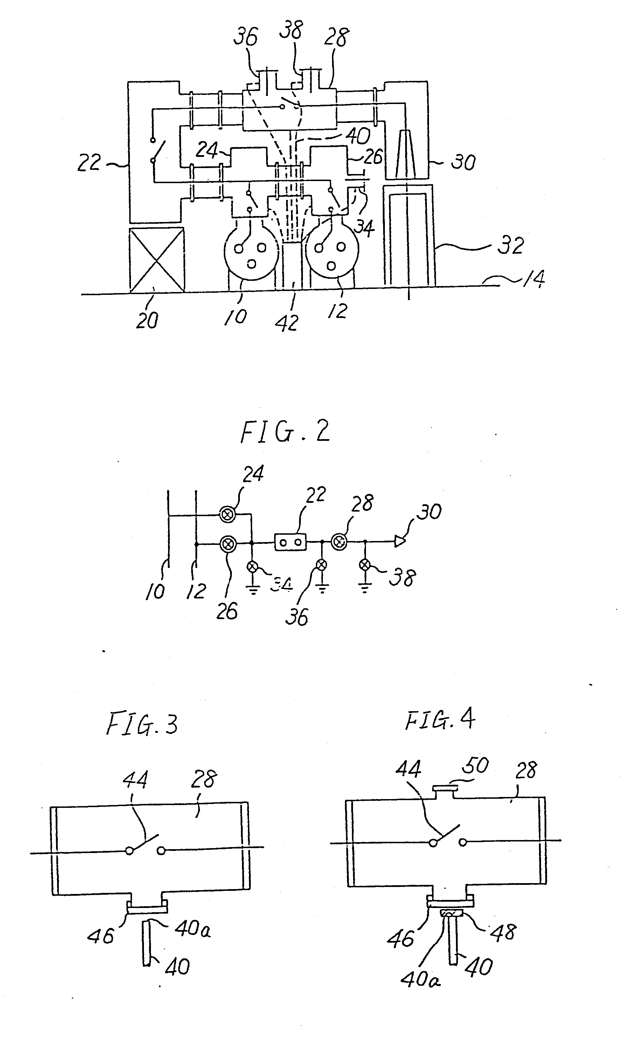

In the embodiment of the present invention illustrated in Fig. 1, a pair of double buses 10 and 12 are disposed on the ground or a foundation 14 to extend in parallel spaced relationship and perpendicularly to the plane of Fig. 1 to form a cable outgoing line circuit. A pedestal 20 is disposed in spaced relationship on the lefthand side as viewed in Fig. 1 of the double bus 10 on the ground or foundation 14 and a housing for a circuit breaker 22 represented by a pair of contacts is suitably disposed on the pedestal 20. The housing for the circuit breaker 22 has a lower portion as viewed in Fig. 1 hermetically connected via a connecting tube to a housing for a first circuit disconnector 24 disposed on the double bus 10 and represented by a pair of contacts. The housing for the first circuit disconnector 24 is hermetically connected via a connecting tube to a housing for a second circuit disconnector 26 disposed on the double bus 12 and represented by a pair of contacts.

The housing for the circuit breaker 22 has an upper portion is hermetically connected via a connecting tube for a housing for a third circuit disconnector 28 disposed above the housings for the circuit disconnectors 24 and 26 which are horizontally aligned with each other. The third circuit disconnector 28 is similarly represented by a pair of contacts and the housing therefor is hermetically

SO14P-2820EPA

connected via a connecting tube to a housing for a cable sealing end 30 suitably disposed on another pedestal 32 subsequently disposed on the ground or foundation 14 to be spaced from the righthand side as viewed in Fig. 1 of the double bus 12.

Furthermore a ground switch 34 is disposed within a housing protruding in hermetical relationship from the righthand end as viewed in Fig. 1 of the housing for the second circuit disconnector 26 and a pair of second and third ground switches 36 and 38 are disposed within housings hermetically extending from the upper side as viewed in Fig. 1 of the housing for the third circuit disconnector 28.

Thus all the housings are hermetically connected to one another to form an enclosed container for the circuit breaker 22, the circuit disconnectors 24, 26 and 28, and the ground switches 34, 36 and 38. The cable sealing end 30 is also disposed within this container. The enclosed container is filled with an electrically insulating gas (not shown).

As shown best in Fig. 2 wherein there is illustrated a single-line connection diagram of the arrangement shown in Fig. 1, the double buses 10 and 12 are connected to the circuit breaker 22 through the first and second circuit disconnectors 24 and 26 respectively and the circuit breaker 22 is connected to the third circuit disconnector 28 subsequently connected to the cable sealing end 30. Also

SO14P-2820EPA

the first ground switch 34 is connected between the junction of the first and second circuit disconnectors 24 and 36 and ground, while the second and third ground switches 36 and 38 respectively are connected between the junction of the circuit breaker 22 and the third circuit disconnector 28 and ground, and between the that of the third circuit disconnector 28 and the cable sealing end 30 and the ground respectively.

In order to directly visually observe the open and closed statuses of contact sets, in this case, the pairs of contacts of the circuit disconnectors 24, 26 and 28 and the ground switches 34, 36 and 38, each of the housings therefor is provided with a transparent viewing window through which the associated contact set can be visually observed, although those viewing windows are not illustrated in Fig. 1 only for purposes of illustration.

From the foregoing it is seen that the circuit breaker 22, the circuit disconnectors 24, 26 and 28, and the ground switches 34, 36 and 38 are located at separate positions and at different levels. Thus, in order that the operator directly visually observe the contact statuses of the above-mentioned components, it has been required to provide on the arrangement of Fig. 1 an inspection corridor which is complicated in structure and large-scaled. For example, a pair of ascending corridor extending from the ground or foundation 14 portions have been disposed between the double bus 12 and the pedestal 20 and between the double bus 14 and the pedestal 32 and connected at their upper ends as viewed in Fig. 1 to a horizontal corridor portion extending between the housings for the first and second circuit disconnectors 24 and 26 and the housing for the third circuit disconnector 28. Furthermore the pair of ascending corridor portions have been connected on intermediate portions to another horizontal corridor portion extending below the housings for the first and second circuit disconnectors 24 and 26.

According to the present invention, a plurality of fiberscopes are used in place of the inspection corridor as described above. Each of the fiberscopes are formed of a multitude of optical fibers arranged into a bundle.

As shown in Fig. 1, a plurality of fiberscopes, 40 in this case, six fiberscopes, are disposed so that one end of each thereof is positioned on the atmosphere side of an associated one of the transparent viewing windows (not shown) to be somewhat spaced therefrom and look that contact set located on the inside of the associated transparent viewing window. Thus, the one end of each fiberscope forms a light receiving portion.

More specifically, the light receiving portions of the fiberscopes 40 oppose to the transparent viewing window disposed on the lower righthand side as viewed in Fig. 1 of the housing for the first circuit disconnector 24, that disposed on the lower lefthand side as viewed in Fig. 1 of the housing for the second circuit disconnector 26, that centrally disposed on the lower side as viewed in Fig. 1 of the housing for the third circuit disconnector 28. The light receiving portions of the remaining fiberscopes 40 oppose to the transparent viewing window disposed on the lower side as viewed in Fig. 1 of the housing for the first ground switch 34 and the transparent viewing windows disposed on the lefthand sides as viewed in Fig. 1 of the housings for the second and third swiches 36 and 38 respectively.

The other end portions of all the fiberscopes 40 are collected together in a collecting box 42 located on the ground or foundation 14 at any desired position, for example, a position the between the double buses 10 and 12. In other words, the other end portions of all the fiberscopes 40 are collected together into a single group at a predetermined position on the ground or foundation 14.

Thus, it is seen that one can selectively look the contact statuses of the circuit disconnectors and the ground switches at a single position by visually observing the other ends of the collected fiberscopes 40.

Fig. 3 shows a positional relationship between one of the viewing window and the light receiving portion of the associated fiberscope. In Fig. 3 the housing for the third circuit disconnector 28 is shown as including a pair of contacts 44 with the housings for the second and third ground switches 36 and 38 omitted only for purposes of illustration. The viewing window 46 is disposed on the lower side as viewed in Fig. 3 of the housing so as to be located directly below the pair of contacts 44 and hermetically closed with a transparent plate formed, for example of an acryl resion. Thus the pair of contacts 44 in the housing can be visually observed through the transparent viewing window 46. The light receiving portion 40a of the associated fiberscope 40 is fixed on that side of the transparent viewing window 46 remote from the pair of contacts 44, that is to say, on the atmosphere side of the viewing window 46 to be somewhat spaced from the latter. Thus the pair of contacts 44 can be looked at the other end of the associated fiberscope through the transparent viewing window 46.

The transparent viewing windows disposed on the other housings are identical to the transparent viewing window 46 shown in Fig. 3 and oppose to the light receiving portions of the associated fiberscopes 40 respectively in the same manner as shown in Fig. 3.

In a modification of the present invention shown in Fig. 4 wherein like reference numerals designate the components identical to those shown in Fig. 3, a focussing lens 48 is mounted at the end of the light receiving portion 40a of the associated fiberscope 40 for the purpose of facilitating the imaging of the pair of contacts 44.

Alternatively a focussing lens may be substituted for the transparent plate hermetically closing the viewing window 46.

In order to move definitely observe the inside of the housing a lighting window 50 is disposed on the housing to oppose to the viewing window 46 as shown also in Fig. 4.

The lighting window may be disposed on the enclosed container for each of the transparent viewing window or for each of the selected transparent viewing windows. Alternatively a single lighting window may be disposed on the enclosed container at any desired position.

From the foregoing it is seen that, according to the present invention, an inspector located on the ground or a foundation can visually observe the inside of housings for circuit disconnectors and ground switches. Thus the visual observation can be safely effected and also an inspection time can reduce. Furthermore the present invention can eliminate the necessity of providing an inspection corridor complicated in structure and large scaled.

While the present invention has been illustrated described in conjunction with a plurality of fiberscopes having the other ends collected together in a single collecting box, it is to be understood that the other ends of the fiberscopes may be collected together in a plurality of groups each including a plurality of fiberscopes at a single position or at different positions located on the ground or foundation.

SO14P-2820EPA

CLAIMS:

1. A gas insulated switch assembly comprising an enclosed container filled with an electrically insulating gas, circuit disconnectors and ground switches having respective contact sets disposed within the enclosed container, and a plurality of transparent viewing windows one for each of the contact sets provided on the enclosed container to permit the contact sets to be visually observed therethrough respectively, characterized in that there are provided a plurality of fiberscopes (40) one for each of the transparent viewing windows (46), each of the fiberscopes (40) including a multitude of optical fibers arranged into a bundle, and a light receiving portion (40a) at one end thereof positioned on the atmosphere side of the associated transparent viewing window (46) to oppose to the latter.

2. A gas insulated switch assembly according to claim 1, characterized in that the plurality of fiberscopes (40) have the other end portions collected together into a single group or a plurality of groups each including a plurality of fiberscopes (40) at a predetermined position (42).

3. A gas insulated switch assembly according to claim 1 or 2, characterized in that a focussing lens (48) is operatively associated with the light receiving portion (40a) of each of the fiberscopes (40).

SO14P-2820EPA

4. A gas insulated switch assembly according to any of claims 1 to 3, characterized in that each of the transparent viewing window (46) comprises a focussing lens.

5. A gas insulated switch assembly according to any of claims 1 to 4, characterized in that the enclosed container is provided with at least one lighting window (50).

SO14P-2820EPA

FIG.1

FIG.2

FIG.3

FIG.4

European Patent
Office

**EUROPEAN SEARCH REPORT**

0122595

Application number

EP 84 10 4050

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | GB-A- 599 421 (HAZEMEIJER) <br> * Page 2, lines 2-22 * | 1 | H 01 H 9/16 <br> H 02 B 15/00 <br> H 02 B 13/02 |
| A | | 5 | |
| | --- | | |
| Y | GB-A-1 103 213 (AKIO HAYAMA) <br> * Page 1, lines 62-91; page 2, lines 1-2 * | 1 | |
| A | | 2,3 | |
| | --- | | |
| A | US-A-2 692 921 (L.J.A. LE GOFF) <br> * Column 1, lines 1-32 * | 1 | |
| | ----- | | |

TECHNICAL FIELDS
SEARCHED (Int. Cl. ³)

H 01 H 9/16
H 02 B
G 02 B 5/17

The present search report has been drawn up for all claims

| Place of search | Date of completion of the search | Examiner |
|---|---|---|
| THE HAGUE | 05-07-1984 | LIBBERECHT L.A. |